# EUROPEAN PATENT APPLICATION

(11) **EP 2 244 075 A2**
(43) Date of publication of application: **27.10.2010**
(21) Application number: 10159868.8
(22) Date of filing: 14.04.2010
(51) Int. Cl.: G01F 23/26, F04D 15/02

(54) **Self contained inline field effect fluid detection**

(30) Priority: 20.04.2009 US 426551
(71) Applicant: ITT Manufacturing Enterprises, Inc., Wilmington, Delaware 19801 (US)
(72) Inventor: Irving, Michael Howard, Haverhill, M.A. 01832 (US)
(74) Representative: Dreiss

(57) **Abstract**

A fluid detection device features a collection container (4) having an inlet port (8) for coupling to a fluid line of the fluid source and an outlet port (10) for coupling to a corresponding fluid line of the pump; and a circuit board (16) containing a water detection sensor (6a,6b) configured to respond to the presence of fluid in the collection container and provide a water detection sensor signal for activating or deactivating the pump for pumping the fluid from the collection container. The fluid detection device may take the form of an inline field effect fluid detection device that includes the collection container (4) having at least one inlet port (8), at least one outlet port (10), a mesh filter and the circuit board (6) containing the at least one water detection sensor (6a,6b) to measure the presence of the fluid, e.g. water, and the circuit technology (e.g. field effect sensing) to activate the pump. At least two wires would exit the device that will connect to the power source and the pump.

## Description

### BACKGROUND OF THE INVENTION

### 1. Field of the Invention

This invention relates to a fluid detection device; more particularly, relates to a fluid detection device for detecting the presence of fluid in a container and activating or deactivating a pump for pumping the fluid from the container.

### 2. Description of Related Art

Many different types and kinds of fluid detection devices that use mechanical switches to detect the presence of fluid are known in the art.

Moreover, many different types and kinds of fluid detection devices that use non-mechanical switches to detect the presence of fluid are also known in the art.

However, there is currently no known way or technique to activate a pump with an inline non-mechanical switch that will allow a user to simply install an inline water detection collection box between a fluid source and a pump and will automatically activate the pump whenever fluid is present, e.g., in a hose.

### SUMMARY OF THE INVENTION

The present invention provides a new and unique fluid detection device featuring a collection container having an inlet port to be coupled to a fluid line of the fluid source and an outlet port to be coupled to a corresponding fluid line of the pump; and a circuit board containing a water detection sensor configured to respond to the presence of fluid in the collection container and provide a water detection sensor signal for activating or deactivating the pump for pumping the fluid from the collection container.

The invention provides a fluid detection device comprising a collection container having an inlet port to be coupled to a fluid line of a fluid source and an outlet port to be coupled to a corresponding fluid line of a pump; and a circuit board having a water detection sensor configured to respond to the presence of fluid in the collection container and provide a water detection sensor signal for activating or deactivating the pump for pumping the fluid from the collection container. In the following preferred embodiments which can be combined in any way are described. In one embodiment the water detection sensor is a non-mechanical switch. In another fluid detection device the water detection sensor comprises a field effect sensor that responds to the presence of fluid in the collection container by sensing a change in an electric field. Further the fluid detection device automatically activates the pump whenever water is present in the collection container. Further the collection container comprises one or more mesh filters arranged therein. The circuit board can be arranged inside or outside the collection container. The circuit board can comprise two or more wires, including one wire for connecting to the pump, and another wire for connecting to a power source connected to the pump.

The invention also provides an inline water detection collection box comprising a collection container having an inlet port to be coupled to a fluid line of a fluid source and an outlet port to be coupled to a corresponding fluid line of a pump; and one or more modules configured to sense the presence of fluid in the collection container by sensing a change in an electric field and to provide a signal for activating or deactivating the pump for pumping the fluid from the collection container. Further the one or more modules can include a field effect sensor that senses the presence of fluid in the collection container without using a mechanical switch or moving parts. The one or more modules can form part of a circuit board. Further the circuit board can automatically activate the pump whenever water is present in the collection container. The circuit board can be arranged inside the collection container or outside the collection container in a separate enclosed chamber. Further the circuit board can comprise at least two wires, including one wire for connecting to the pump, and another wire for connecting to a power source.

The invention also provides a method comprising the steps of coupling an inlet port of a collection container to a fluid line of a fluid source, and coupling an outlet port for coupling to a corresponding fluid line of the pump; detecting the presence of fluid in the collection container by sensing to a change in an electric field using a circuit board having a field effect sensor and being arranged in relation to the collection container; and providing a signal for activating or deactivating the pump for pumping the fluid from the collection container without using a mechanical switch. Further the method can comprise the step of connecting one wire from the circuit board to the pump for providing the signal, and connecting another wire from the circuit board to a power source.

According to some embodiments, the fluid detection device may include one or more of the following features: The circuit board may include a field effect sensor that responds to the presence of fluid in the collection container by sensing a change in an electric field. The fluid detection device can automatically activates the pump whenever water is present in the collection container. The collection container may include one or more mesh filters arranged therein. The circuit board may be arranged either inside or outside the collection container. The circuit board may include two or more wires, including one wire for connecting to the pump, and another wire for connecting to a power source, e.g., connected to the pump.

According to some embodiments, the present invention may also take the form of an inline field effect fluid detection collection box featuring the collection container having the inlet port to be coupled to the fluid line of the fluid source and the outlet port to be coupled to the corresponding fluid line of the pump; in combination with one or more modules configured to sense the presence of fluid in the collection container by sensing a change in an electric field and to provide a signal for activating or deactivating the pump for pumping the fluid from the collection container. The one or more modules may include the circuit board having a field effect sensor that senses the presence of fluid in the collection container without using a mechanical switch or moving parts.

According to some embodiments, the present invention may also take the form of a method that includes: coupling an inlet port of a collection container to a fluid line of a fluid source, and coupling an outlet port for coupling to a corresponding fluid line of the pump; detecting the presence of fluid in the collection container by sensing to a change in an electric field using a circuit board having a field effect sensor and being arranged in relation to the collection container; and providing a signal for activating or deactivating the pump for pumping the fluid from the collection container without using a mechanical switch. The method may also include connecting one wire from the circuit board to the pump for providing the signal, and connecting another wire from the circuit board to a power source, e.g., connected to the pump.

The device according to the present invention will allow a user to simply install the inline field effect fluid detection collection box between the fluid source and the pump and will automatically activate the pump whenever fluid is present, e.g., in the hose.

Applications of the invention may include marine, industrial, food services and/or pharmaceutical applications, although the scope of the invention is not intended to be limited to any particular type or kind of application.

These and other features, aspects, and advantages of embodiments of the invention will become apparent with reference to the following description in conjunction with the accompanying drawings. It is to be understood, however, that the drawings are designed solely for the purposes of illustration and not as a definition of the limits of the invention.

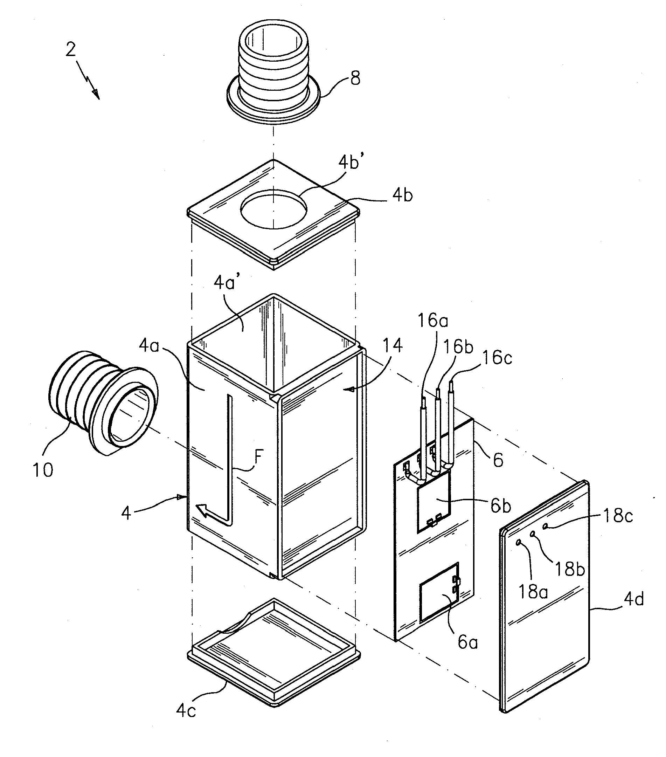

### BRIEF DESCRIPTION OF THE DRAWING

The drawing, which is not necessarily to scale, shows an exploded view of an inline field effect fluid detection device according to some embodiments of the present invention.

In the following description of the exemplary embodiment, reference is made to the accompanying drawing, which form a part hereof, and in which is shown by way of illustration of an embodiment in which the invention may be practiced. It is to be understood that other embodiments may be utilized, as structural and operational changes may be made without departing from the scope of the present invention.

### DETAILED DESCRIPTION OF THE INVENTION

The drawing shows an inline fluid detection collection box generally indicated as 2 according to some embodiments of the present invention. The inline fluid detection collection box 2 includes a collection container 4 and a circuit board 6. The collection container 4 has an inlet port 8 to be coupled to a fluid line (not shown) of a fluid source (not shown) and an outlet port 10 to be coupled to a corresponding fluid line (not shown) of a pump (not shown). The circuit board 6 may contain, or take the form of, one or more modules 6a, 6b that include a water detection sensor configured to respond to the presence of fluid in the collection container 4 and provide a water detection sensor signal for activating or deactivating the pump for pumping the fluid from the collection container 4. The arrow F shows the direction of flow of the fluid through the collection container 4 from the input port 8 to the output port 10.

The inline fluid detection collection box 2 may take the form of an inline field effect fluid detection device that would consist of the collection container 4 in combination with the circuit board 6 having a field effect sensor technology, where the collection container has the inlet port 8 for coupling to the fluid line of the fluid source and the outlet port 10 for coupling to the corresponding fluid line of the pump; and where the one or more modules 6a, 6b is configured to sense the presence of fluid in the collection container 4 by sensing a change in an electric field and to provide a signal for activating or deactivating the pump for pumping the fluid from the collection container 4. The one or more modules 6a, 6b may either take the form of, or form part of, the circuit board 6, and include a field effect sensor that senses the presence of fluid in the collection container without using a mechanical switch or moving parts.. As a person skilled in the art would appreciate, the change in the electric field that is sensed by the field effect sensor is caused by the presence of some amount of fluid in the collection container, although the scope of the invention is not intended to be limited to the amount of fluid that may trigger the field effect sensor.

The collection container may be formed as one integral part and as a collection of two or more parts coupled together. By way of example, the collection container 4 may be formed by an injection molding process and made, e.g., of ABS material; however, the scope of the invention is not intended to be limited to the type or kind of material from which the container is made, or the process by which the container is formed. As shown, the collection container may include a main body portion 4a, a top portion 4b, a bottom portion 4c and a cap portion 4d that may be coupled together using known techniques, such as a sonic welding technique that is known in the art.. The scope of the invention is not intended to be limited to the manner in which the collection container parts are coupled together. The top portion 4b may include an opening 4b' formed therein that may be used to couple to the input port 8, for coupling to the fluid line (not shown) of the fluid source (not shown). One side 4a' of the main body portion 4a of the collection container 4 may include a similar opening (not shown) formed therein that may be used to couple to the output port 10, for coupling to the corresponding fluid line (not shown) of the pump (not shown). The input port 8 that may take the form of an input hose barb, as shown, and the output port 10 that may take the form of an output hose barb, as also shown. In the inline field effect fluid detection device 2, the circuit board 6 may take the form of a printed circuit board having, or being formed in whole or in part by, the one or more of the modules 6a, 6b, that includes a field effect sensor configured to respond to the presence of fluid in the collection container 4 by sensing a change in an electric field. Field effect sensor technology is known in the art, and the scope of the invention is not intended to be limited to any particular type or kind either now known or later developed in the future.

As shown, the printed circuit board 6 may be arranged in a chamber generally indicated as 14 formed in or on the collection container 4 and covered and sealed by the cap portion 4b in a water tight manner using, e.g., a sonic welding technique that is known in the art. In one embodiment, the circuit board 6 may be adhered to the outside wall of the main body portion 4a inside the chamber 14. The printed circuit board 6 may include at least two wires or input/output leads 16a, 16b, 16c, as shown, that exit from the chamber 14 for connecting to the power source and the pump. By way of example, the cap portion 4d is shown with holes 18a, 18b, 18c through which the wires may pass using, for example, waterproof grommets (not shown).

### Implementation of the Functionality of the Circuit Board Modules

The functionality of the one or more modules 6a, 6b may be implemented using hardware, software, firmware, or a combination thereof, although the scope of the invention is not intended to be limited to any particular embodiment thereof. In a typical software implementation, the modules 6a, 6b would be one or more microprocessor-based architectures having a microprocessor, a random access memory (RAM), a read only memory (ROM), input/output devices and control, data and address buses connecting the same. A person skilled in the art would be able to program such a microprocessor-based implementation to perform the functionality described herein without undue experimentation. The scope of the invention is not intended to be limited to any particular implementation using technology now known or later developed in the future. Moreover, the scope of the invention is intended to include the modules 6a, 6b being a stand alone modules, or in some combination with other circuitry for implementing another module.

The one or more modules 6a, 6b may include one or more other modules for implementing other functionality that is known in the art, but does not form part of the underlying invention per se, and is not described in detail herein. For example, the functionality of the one or more other modules may include the techniques for the provisioning of the signal for activating or deactivating the pump based on certain processing control functionality, including providing the signal automatically, providing the signal after a certain time period, etc., that can depend on a particular application for a particular customer.

### Embodiments Having Multiple Input or/and Output Ports

The scope of the invention is intended to include embodiments having multiple input and/or output ports. In this case, the collection container may include either multiple inlet ports, each for coupling to a respective fluid line of a respective fluid source; and/or multiple outlet ports, each for coupling to a respective corresponding fluid line of a respective pump. The circuit board may contain one or more water detection sensors, each configured to respond to the presence of fluid in the collection container, and to provide a respective water detection sensor signal for activating or deactivating the respective for pumping the fluid from the collection container.

The scope of the invention is intended to include embodiments using multiple circuit boards alone or in combination with the embodiments having the multiple input and/or output ports.

### Scope of the Invention

Although described in the context of particular embodiments, it will be apparent to those skilled in the art that a number of modifications and various changes to these teachings may occur. Thus, while the invention has been particularly shown and described with respect to one or more preferred embodiments thereof, it will be understood by those skilled in the art that certain modifications or changes, in form and shape, may be made therein without departing from the scope and spirit of the invention as set forth above.

## Claims

1. A fluid detection device comprising:
a collection container having an inlet port to be coupled to a fluid line of a fluid source and an outlet port to be coupled to a corresponding fluid line of a pump; and
a circuit board having a water detection sensor configured to respond to the presence of fluid in the collection container and provide a water detection sensor signal for activating or deactivating the pump for pumping the fluid from the collection container.

2. The fluid detection device according to claim 1, wherein the water detection sensor
- is a non-mechanical switch, and/or
- comprises a field effect sensor that responds to the presence of fluid in the collection container by sensing a change in an electric field.

3. The fluid detection device according to claim 1 or 2, wherein the fluid detection device automatically activates the pump whenever water is present in the collection container.

4. The fluid detection device according to one of the preceding claims, wherein the collection container comprises one or more mesh filters arranged therein.

5. The fluid detection device according to one of the preceding claims, wherein the circuit board is arranged inside or outside the collection container.

6. The fluid detection device according to one of the preceding claims, wherein the circuit board comprises two or more wires, including one wire for connecting to the pump, and another wire for connecting to a power source connected to the pump.

7. An inline water detection collection box comprising:
a collection container having an inlet port to be coupled to a fluid line of a fluid source and an outlet port to be coupled to a corresponding fluid line of a pump; and
one or more modules configured to sense the presence of fluid in the collection container by sensing a change in an electric field and to provide a signal for activating or deactivating the pump for pumping the fluid from the collection container.

8. The inline water detection collection box according to claim 7, wherein the one or more modules include a field effect sensor that senses the presence of fluid in the collection container without using a mechanical switch or moving parts.

9. The inline water detection collection box according to claim 7 or 8, wherein the one or more modules form part of a circuit board.

10. The inline water detection collection box according to claim 9, wherein the circuit board automatically activates the pump whenever water is present in the collection container.

11. The inline water detection collection box according to claim 9 or 10, wherein the circuit board is arranged inside the collection container or outside the collection container and particularly in a separate enclosed chamber.

12. The inline water detection collection box according to one of claims 9 to 11, wherein the circuit board comprises at least two wires, including one wire for connecting to the pump, and another wire for connecting to a power source.

13. A method comprising the steps of:
coupling an inlet port of a collection container to a fluid line of a fluid source,
and coupling an outlet port for coupling to a corresponding fluid line of the pump;
detecting the presence of fluid in the collection container by sensing to a change in an electric field using a circuit board having a field effect sensor and being arranged in relation to the collection container; and
providing a signal for activating or deactivating the pump for pumping the fluid from the collection container without using a mechanical switch.

14. The method according to claim 13, wherein the method comprises connecting one wire from the circuit board to the pump for providing the signal, and connecting another wire from the circuit board to a power source.
